# EUROPEAN PATENT SPECIFICATION

(11) **EP 1 166 616 B1**
(45) Date of publication and mention of the grant of the patent: **27.07.2005**
(21) Application number: 01111324.8
(22) Date of filing: 09.05.2001
(51) Int. Cl.: A01D 41/14

(54) **Shearing bar apparatus for agricultural harvesting machines**
Mähbrett für Erntemaschinen
Tablier de coupe pour machines de récolte

(30) Priority: 30.06.2000 IT UD000130
(43) Date of publication of application: 02.01.2002
(73) Proprietor: F.LLI CRESSONI SpA, 46049 Volta Mantovana (MN) (IT)
(72) Inventor: Cressoni, Romano, 46049 Volta Mantovana (MN) (IT)
(74) Representative: Petraz, Gilberto Luigi

(56) References cited:
- EP-A- 0 326 836
- EP-A- 0 373 406
- EP-A- 0 624 309
- DE-A- 2 026 190

## Description

### FIELD OF THE INVENTION

The invention concerns a shearing bar apparatus able to be assembled on the front part of an agricultural harvesting machine, such as a combine harvester, a self-propelled shredder, or similar.

The apparatus according to the invention comprises two independent operating parts, associated with a supporting structure. In the working position, or harvesting position, the two operating parts are aligned on the same horizontal plane, near the ground, so as to cover as wide a harvesting zone as possible; in the inactive position, or when the machine is being transferred, they are arranged one on top of the other to occupy as little road space as possible, substantially equal to the length of one of the two operating parts. The two operating parts are moved from one position to the other by means of kinematisms which allow the baricenter of the combination of the two operating parts to remain constantly in a substantially central position.

### BACKGROUND OF THE INVENTION

The state of the art includes a shearing bar apparatus for agricultural harvesting machines, which consists of two operating parts each of which is substantially as long as the width of the agricultural machine. The two operating parts of the apparatus pivot on each other and can selectively assume a harvesting position, wherein they are aligned on the same horizontal plane, so that they cover a harvesting zone substantially equal to double their length, or an inactive position, or when the agricultural machine has to be transferred, wherein they are arranged one above the other so as to occupy as little road space as possible, a little more than the length of one of the two.

In this conventional apparatus, one of the two operating parts always stays horizontal, while the other, which pivots on the upper part of the first, more precisely on a pin which has its axis parallel to the longitudinal axis of the agricultural machine, is able to be positioned above the first operating part, performing a rotation of 180° around said pin. Moreover, before being superimposed, the two operating parts are made to translate together, horizontally and in the same direction, perpendicular to the longitudinal axis of the agricultural machine, in order to be positioned centrally with respect thereto when they are superimposed one above the other.

This conventional apparatus has the following disadvantages, however.

When the second operating part is rotated through 180° with respect to the first, on which it pivots, there is a considerable imbalance of the weights, and the baricenter of the combination of the two parts is continually displaced. This requires very strong structures and command members, in order to support the torsional stresses.

The second operating part, after rotating through 90°, is hence in a vertical position, with one end at several metres from the ground, well above the top of the cabin of the agricultural harvesting machine on which it is assembled, with consequent problems of bulk during the folding operation.

When they are superimposed, the two operating parts take up considerable space in height, since the pivoting point of the second operating part is arranged very much above the upper surface of the first operating part.

Both operating parts, since they pivot on each other, have to be translated together in the same direction, after they have been folded back one on top of the other, so that the relative command members have to have adequate strength.

Since each of the two operating parts is provided with a shearing blade and a conveyor roller which, during harvesting, have their lower part arranged near the ground, in the transfer position the shearing blade and the conveyor roller of the second operating part, which is rotated by 180°, come to be very high up, thus preventing the operator of the agricultural machine from seeing the road near the machine.

The present Applicant has devised, tested and embodied this invention to overcome these shortcomings of the state of the art and to obtain further advantages.

### SUMMARY OF THE INVENTION

The invention is set forth and characterized in the main claim, while the dependent claims describe other innovative features of the invention.

One purpose of the invention is to achieve a shearing bar apparatus able to be arranged on the front part of an agricultural harvesting machine, transverse to the longitudinal axis of the latter, which in the working position allows to operate on as wide a harvesting zone as possible, whereas in the inactive position, or when the agricultural machine is being transferred, it occupies as little space as possible.

Another purpose of the invention is to achieve an apparatus in which the operating parts which constitute the apparatus, as they pass from one of said working and inactive positions to the other, are subject to the minimum number of movements necessary and without any imbalance of weight.

Another purpose of the invention is to achieve an apparatus which, even when it is in the inactive position, allows the operator of the agricultural machine optimum visibility when driving, even of the stretch of road next to the machine.

Another purpose of the invention is to achieve an apparatus which will allow to assemble, on each of the two operating parts which constitute the apparatus, a shearing blade which is substantially as long as the maximum road space allowed.

In accordance with these purposes, the apparatus according to the invention comprises two operating parts each of which is provided with substantially horizontal shearing means and both supported, in autonomous fashion, by support means which can be associated with the agricultural machine. A first of said two operating parts can slide axially with respect to said support means, between an inactive position, wherein it is centered with respect to the agricultural machine, and a working position, wherein it is displaced laterally with respect to the agricultural machine. A second of said two operating parts is able to be translated, remaining substantially horizontal, between an inactive position, wherein it is centered with respect to the agricultural machine and superimposed above the first part, and a working position wherein it is horizontally aligned with the first operating part and laterally displaced with respect to the agricultural machine, on the opposite side to the side of the first operating part. A kinematism, associated with actuation means, is provided to perform the movements, in synchronized fashion, of the operating parts, so that the baricenter of the combination consisting of the two operating parts remains substantially in a centered position during these movements too.

The horizontal movement of the first operating part between the inactive and working positions is achieved by a first actuator connected to the support means.

According to a first embodiment, the kinematism comprises a first toothed wheel assembled fixed on the support means, a second toothed wheel attached to the second operating part, and a connection chain between the first and second toothed wheels.

The second toothed wheel is assembled, free to rotate, to the end of a supporting arm which is able to rotate around the pin of the first toothed wheel, thanks to a second actuator. The latter, making the arm rotate, lifts the second operating part with respect to the support means and the first operating part, which remains temporarily stationary.

The connection chain between the two toothed wheels causes the second operating part to translate without rotating, thus remaining constantly horizontal.

A third actuator, connected to the second, is able to be actuated simultaneously with the first actuator. In this way the third actuator completes the displacement of the second operating part above the first operating part, while the first actuator achieves the simultaneous horizontal displacement of the first operating part from the working position to the inactive position.

Similarly, to pass from the inactive position of the two operating parts, first the first and the third actuator are activated simultaneously, after which the second actuator is activated.

According to a first variant, the connection chain between the first and second toothed wheels is replaced by an odd plurality of other toothed wheels, between the first two and serially engaged with each other. In this case the intermediate toothed wheels are also assembled rotatable on the supporting arm.

This first variant also provides that the second toothed wheel is not attached directly to the second operating part, but to a trolley able to slide horizontally with respect to the latter. In this way, by means of a tie-rod connected with the supporting arm, the second operating part also makes a horizontal displacement with respect to the trolley when the supporting arm completes the terminal part of its rotation.

The connection between the first and the second toothed wheel, both in the embodiment with a connection chain, and in the embodiment with an odd number of intermediate toothed wheels, causes the second toothed wheel to make a rotational movement with respect to the support means of the apparatus, but keeping its angular position constant with respect to the horizontal plane.

According to another embodiment, the kinematism comprises a first lever pivoting on the support means and connected to the second operating part, a second lever pivoting on the second operating part and connected to the first lever, by means of a third connecting lever. The articulation pin between the second and third lever is connected to a second actuator assembled on the first lever (the first actuator is the one which commands the horizontal displacement of the first operating part).

This other embodiment also comprises a third actuator, able to make the first lever selectively rotate to cause the second operating part to be displaced from the working position to the inactive position and vice versa, while the second actuator keeps the second operating part constantly horizontal and the first actuator performs the simultaneous horizontal displacement of the first operating part between the two working and inactive positions.

In accordance with a further embodiment, the kinematism comprises two toothed wheels assembled rotatory on support means and connected to each other by a connection chain.

One of the two toothed wheels is solid with a first arm having one end connected to a first pin of the second operating part, whereas the other toothed wheel is solid with a second arm having one end connected to a second pin of the second operating part. The two arms advantageously are elbow-shaped and are substantially specular with respect to each other. Moreover, the distance between the axes of rotation of the two toothed wheels is equal to the distance between the two pins of the second operating part, so that the two arms form a parallelogram.

The connection chain is arranged so as to make the two toothed wheels rotate in the same direction of rotation and at the same time define a substantially rectilinear segment, in correspondence with which the chain itself is connected to an actuator assembled on support means.

For each of these embodiments, computerized control means are provided to coordinate the activation of the three actuators.

In this way, all the afore-said purposes are achieved, and at the same time all the shortcomings of traditional machines are eliminated.

### BRIEF DESCRIPTION OF THE DRAWINGS

These and other characteristics of the invention will be clear from the following description of some preferential forms of embodiment, given as a non-restrictive example, with reference to the attached drawings wherein:
Fig. 1 is a left side view of an apparatus according to the invention, assembled on an agricultural harvesting machine, in a working position;
Fig. 2 is a left side view of the apparatus in Fig. 1, in the inactive position;
Fig. 3 is a schematic rear view of the apparatus in Fig. 1 in the working position;
Fig. 4 is a right side view of the apparatus in Fig. 3 in the working position;
Fig. 5 is a schematic rear view of the apparatus in Fig. 1 in a first intermediate position between the working and inactive position;
Fig. 6 is a right side view of the apparatus according to the invention, in the position shown in Fig. 5;
Fig. 7 is a schematic rear view of the apparatus in Fig. 1 in a second intermediate position between the working and inactive position;
Fig. 8 is a right side view of the apparatus according to the invention, in the position shown in Fig. 7;
Fig. 9 is a schematic rear view of the apparatus in Fig. 1 in the inactive position;
Fig. 10 is a right side view of the apparatus according to the invention, in the position shown in Fig. 9;
Fig. 11 is an enlarged detail of Fig. 3;
Fig. 12 is an enlarged detail of Fig. 9;
Fig. 13 is a schematic rear view of a first variant of the apparatus in Fig. 1 in the working position;
Fig. 14 is a right side view of the apparatus in Fig. 13, in the working position;
Fig. 15 is a schematic rear view of the apparatus in Fig. 13 in a first intermediate position between the working and inactive position;
Fig. 16 is a right side view of the apparatus according to the invention in the position shown in Fig. 15;
Fig. 17 is a schematic rear view of the apparatus in Fig. 13 in a second intermediate position between the working and inactive position;
Fig. 18 is a right side view of the apparatus according to the invention in the position shown in Fig. 17;
Fig. 19 is a schematic rear view of the apparatus in Fig. 13 in the inactive position;
Fig. 20 is a right side view of the apparatus according to the invention in the position shown in Fig. 19;
Fig. 21 is an enlarged detail of Fig. 13;
Fig. 22 is an enlarged detail of Fig. 19;
Fig. 23 is a schematic rear view of another embodiment of the apparatus in Fig. 1 in the working position;
Fig. 24 is a right side view of the apparatus in Fig. 23 in the working position;
Fig. 25 is a schematic rear view of the apparatus in Fig. 23 in a first intermediate position between the working and inactive position;
Fig. 26 is a right side view of the apparatus according to the invention in the position shown in Fig. 25;
Fig. 27 is a schematic rear view of the apparatus in Fig. 23 in a second intermediate position between the working and inactive position;
Fig. 28 is a right side view of the apparatus according to the invention in the position shown in Fig. 27;
Fig. 29 is a schematic rear view of the apparatus in Fig. 23 in the inactive position;
Fig. 30 is a right side view of the apparatus according to the invention in the position shown in Fig. 29;
Fig. 31 is a schematic block diagram of the control circuit of the fluid-dynamic actuators of the apparatuses shown in Figs. 1, 13 and 23;
Fig. 32 is a schematic rear view of another form of embodiment of the apparatus in Fig. 1 in the working position;
Fig. 33 is a schematic rear view of the apparatus in Fig. 32 in a first intermediate position between the working position and the inactive position;
Fig. 34 is a schematic rear view of the apparatus in Fig. 32 in a second intermediate position between the working position and the inactive position;
Fig. 35 is a schematic rear view of the apparatus in Fig. 32 in the inactive position;
Fig. 36 is an enlarged detail of Fig. 32;
Fig. 37 is an enlarged detail of Fig. 35.

### DETAILED DESCRIPTION OF SOME PREFERRED EMBODIMENTS

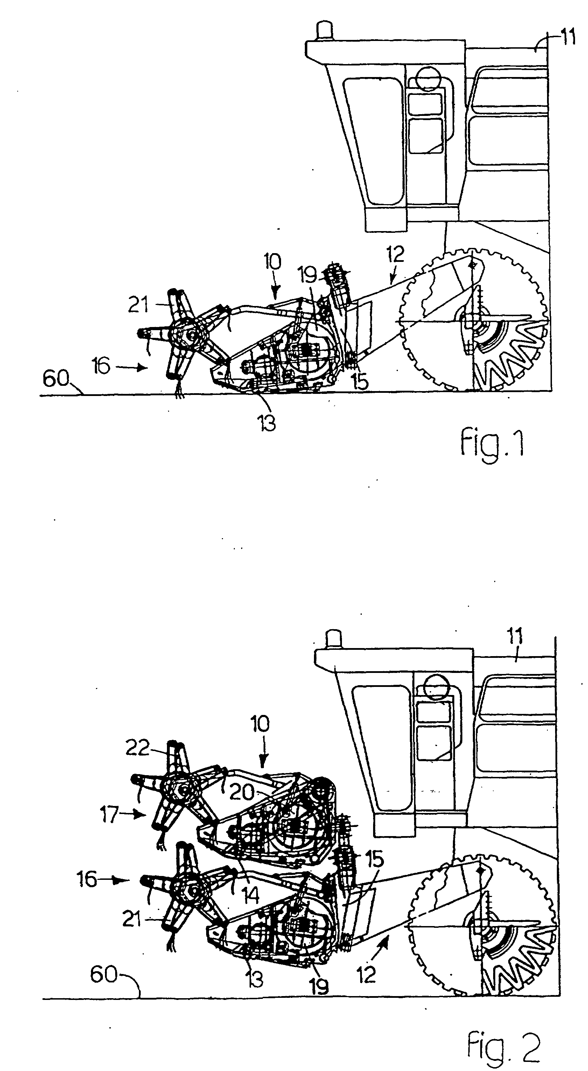

With reference to Figs. 1 and 2, a shearing bar apparatus 10 according to the invention is assembled on the front part of an agricultural harvesting machine 11 of a conventional type, such as for example a combine harvester, a self-propelled shredder, or similar.

The apparatus 10 comprises a front frame 15 assembled in removable fashion on the movable structure 12 of the machine 11.

The apparatus 10 also comprises two operating parts 16 and 17, independent of each other and both assembled on the frame 15.

Each operating part 16 and 17 comprises a front shearing blade 13, respectively 14, and a conveyor roller 19, respectively 20, arranged below, and a front reel 21, respectively 22, arranged above and forward with respect to the direction of movement of the machine 11. The shearing blades 13 and 14, the conveyor rollers 19 and 20 and the reels 21 and 22 are of conventional type, and therefore they are only shown schematically in the drawings.

To give an indicative figure, each operating part 16 and 17 is about 3 m long and about 85 cm high, apart from the bulk of the reels 21 and 22.

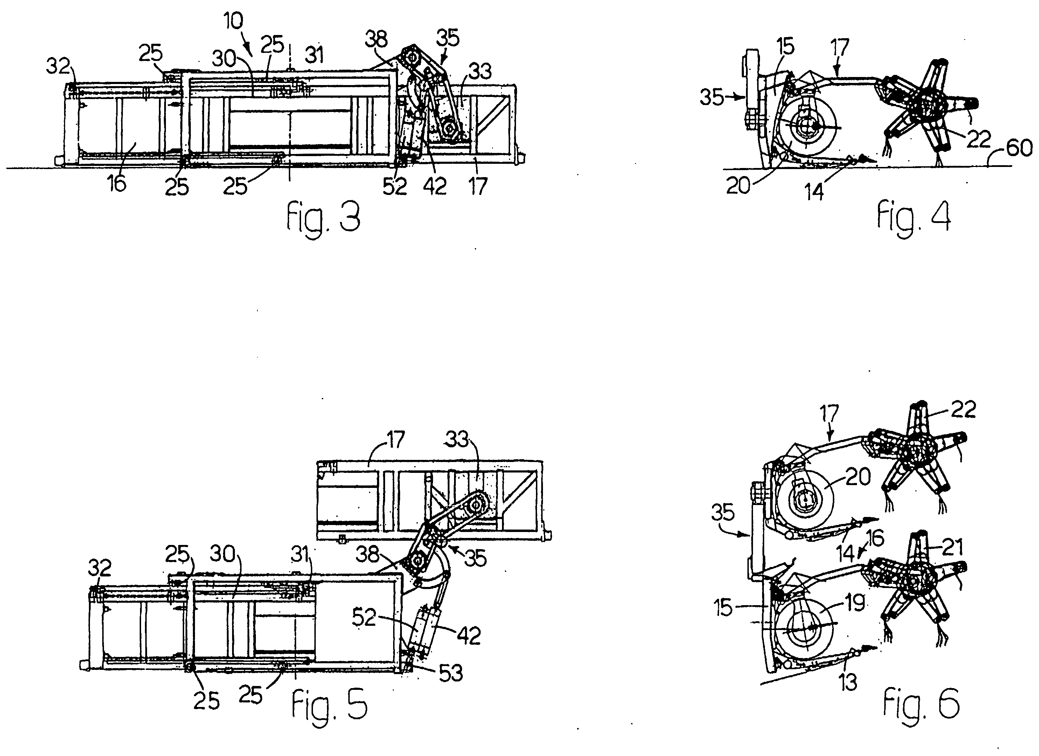

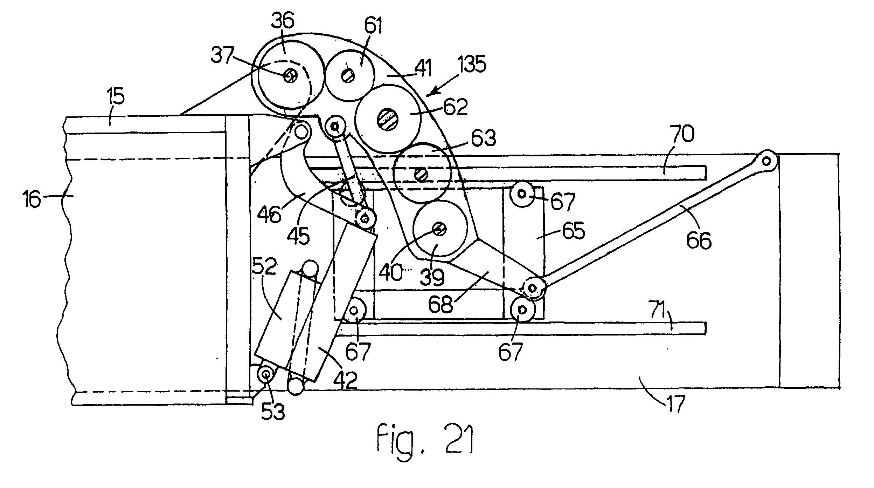

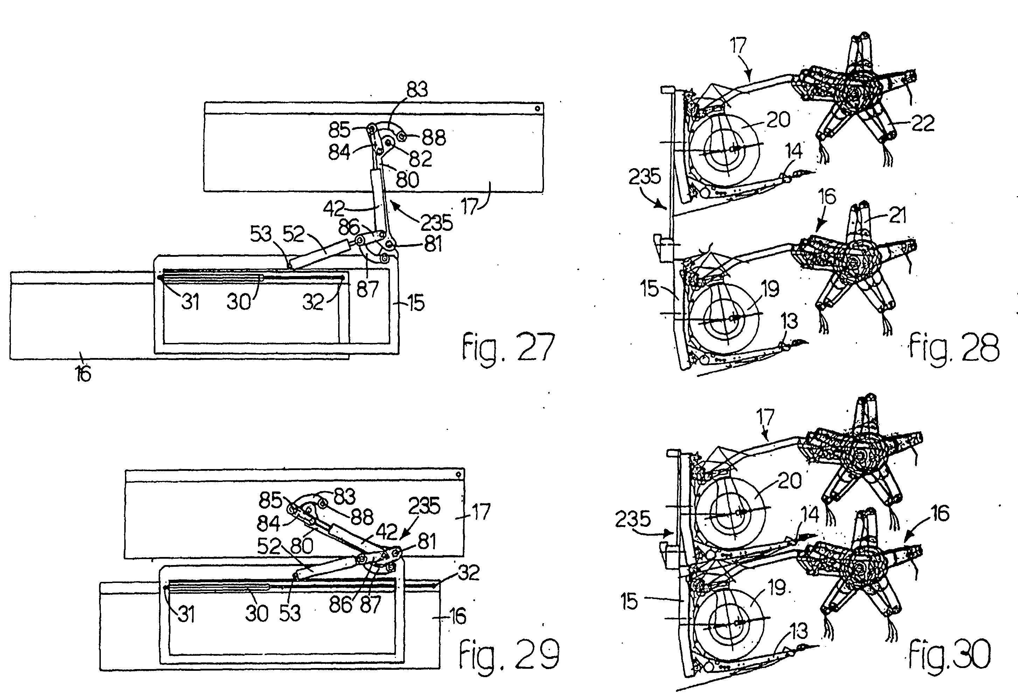

The first operating part 16 (Figs. 3-30) is assembled able to slide horizontally on guide rollers 25 of the frame 15 and is movable between two extreme positions, a working position (shown in Figs. 1, 3, 4, 11, 13, 14, 21, 23 and 24) and an inactive position, or when the agricultural machine 11 is being transferred (shown in Figs. 2, 9, 10, 12, 19, 20, 22, 29 and 30).

The operating part 16 is moved by a first fluid-dynamic actuator 30 with one end 31 connected to the frame 15 and one end 32 connected to the operating part 16.

In accordance with a first embodiment of the invention (Figs. 3-13), the second operating part 17 is provided with a vertical plate 33 to which a first kinematism 35 is connected, comprising a first toothed wheel 36 attached by means of a horizontal pin 37 to a support 38 of the frame 15. The kinematism 35 also comprises a second toothed wheel 39 with its central hub 40 attached to the plate 33.

The second toothed wheel 39 is assembled, free to rotate, on the end of a supporting arm 41 which is able to rotate around the horizontal pin 37 thanks to a second fluid-dynamic actuator 42. The latter is connected to the supporting arm 41 by means of another lever 45 which in turn is connected to the fixed support 38 by means of a further lever 46.

A connection chain 49 engages between the first toothed wheel 36 and the second toothed wheel 39. Two belt-tighteners 50 and 51 are assembled rotatable on the arm 41.

The actuator 42, rotating the supporting arm 41, lifts the second operating part 17 with respect to the frame 15. The chain 49 causes the second toothed wheel 39, during the rotation of the arm 41, to make a rotational movement with respect to the frame 15, while still keeping its angular position constant with respect to the horizontal plane, so that the second operating part 17 stays constantly horizontal, so as to translate without rotating.

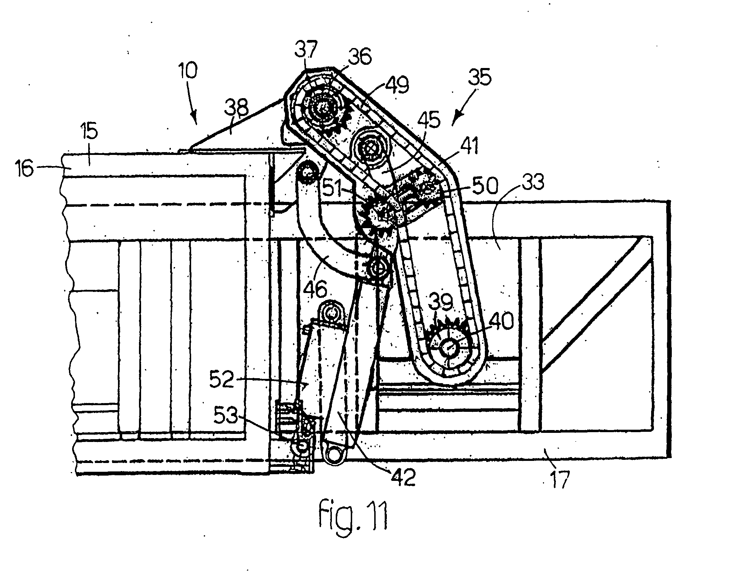

During the first part of its rotation in an anti-clockwise direction (Figs. 3 and 11) the arm 41 also provides to laterally distance the second operating part 17 towards the right.

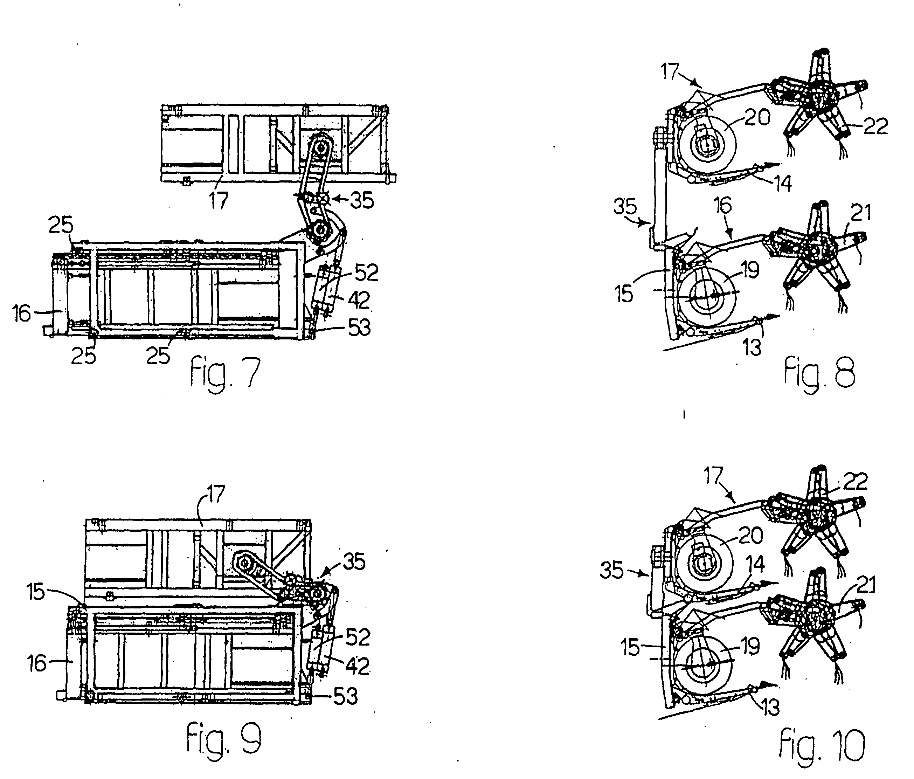

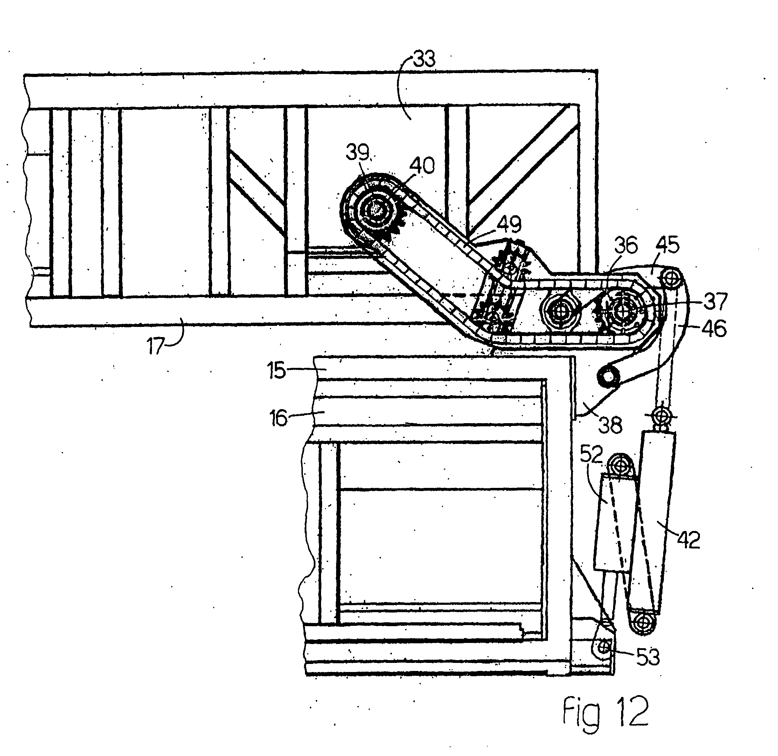

A third actuator 52, connected to the second actuator 42 and with one end 53 attached to the frame 15, is able to be actuated to complete the rotation of the arm 41 from an intermediate position, shown in Figs. 5 and 6 (wherein the second operating part 17 is exactly above where it was in its working position), to the inactive position shown in Figs. 9 and 12.

The third actuator 52 is actuated simultaneously with the first actuator 30, so that the displacements of the two operating parts 16 and 17 towards the inactive position occur simultaneously and the baricenter of the combination of the two parts remains substantially in a centered position with respect to the frame 15 and to the agricultural machine 11. To this end, the fluid-dynamic actuators 30 and 52 are advantageously connected fluid-dynamically to each other, in any conventional manner.

Similarly, for the two operating parts 16 and 17 to pass from the inactive position to the working position, the first and third actuator 30 and 52 are first actuated simultaneously, after which the second actuator 42 is actuated.

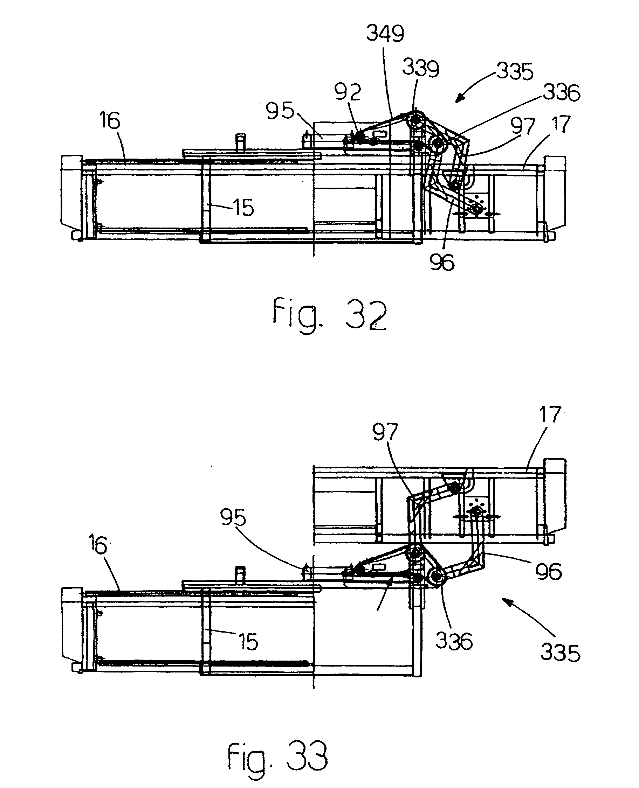

A calculator 55 (Fig. 31), of a conventional type, is connected to the actuators 30, 42 and 52 to command them selectively and to synchronize their actuation. The calculator 55 is connected to a command console, also of a conventional type and not shown in the drawings, situated in the cabin of the machine 11.

The apparatus 10 as described heretofore functions as follows.

Under normal working conditions, that is to say, when the agricultural machine 11 is harvesting, the apparatus 10 is in the positions shown in Figs. 1, 3, 4 and 11. The two operating parts 16 and 17 are adjacent so as to form a single harvesting unit or assembly, with the shearing blades 13 and 14 aligned horizontally and arranged very close to the ground 60.

With the apparatus 10 in this position, the operator of the machine 11 has optimum visibility, scarcely limited at all by the apparatus 10, since the operating parts 16 and 17, and particularly the blades 13 and 14 and the rollers 19 and 20, are in a very low position with respect to the driver's cabin.

To move the operating parts 16 and 17 to the inactive position, that is, to allow the machine 11 to travel over normal roads with the apparatus 10 assembled at the front, first the first actuator 42 is actuated, so as to make the second operating part 17 translate around the horizontal pin 37, detaching it from the first operating part 16 and gradually taking it to the intermediate position shown in Figs. 5 and 6.

Then, the actuators 30 and 52 are simultaneously actuated, to move together both operating parts 16 and 17 but in opposite directions, until they are centered with respect to the frame 15 (position shown in Figs. 9, 10 and 12). In this way the baricenter of the two combined operating parts remains substantially centered with respect to the frame 15, despite the movement of the two operating parts 16 and 17.

In this position the apparatus 10 occupies minimal space, both in width, since it is equal to the length of one of the operating parts 16 and 17, that is, a little over 3 m, and also in height, since it is a little over double the height of the two operating parts 16 and 17, that is, a little over 170 cm.

Moreover, since the movement of the second operating part 17 is purely translatory and not rotational, the shearing blade 14 and the roller 20 have remained in their lower position; in this position too (Fig. 2) the driver of the agricultural machine 11 has a very good visibility, which allows him to see the ground 60 or road surface through the reels 21 and 22, a few meters in front of his observation point, notwithstanding the fact that in the inactive position, when it has to be transported, the entire apparatus 10 is raised from the ground 60.

The movement of the operating parts 16 and 17 from the inactive position to the working position is carried out in the reverse order to that described heretofore.

First, the two operating parts 16 and 17 are displaced simultaneously towards the sides of the apparatus 10, then the operating part 17 is made to translate, lowering it, and brought close to the operating part 16.

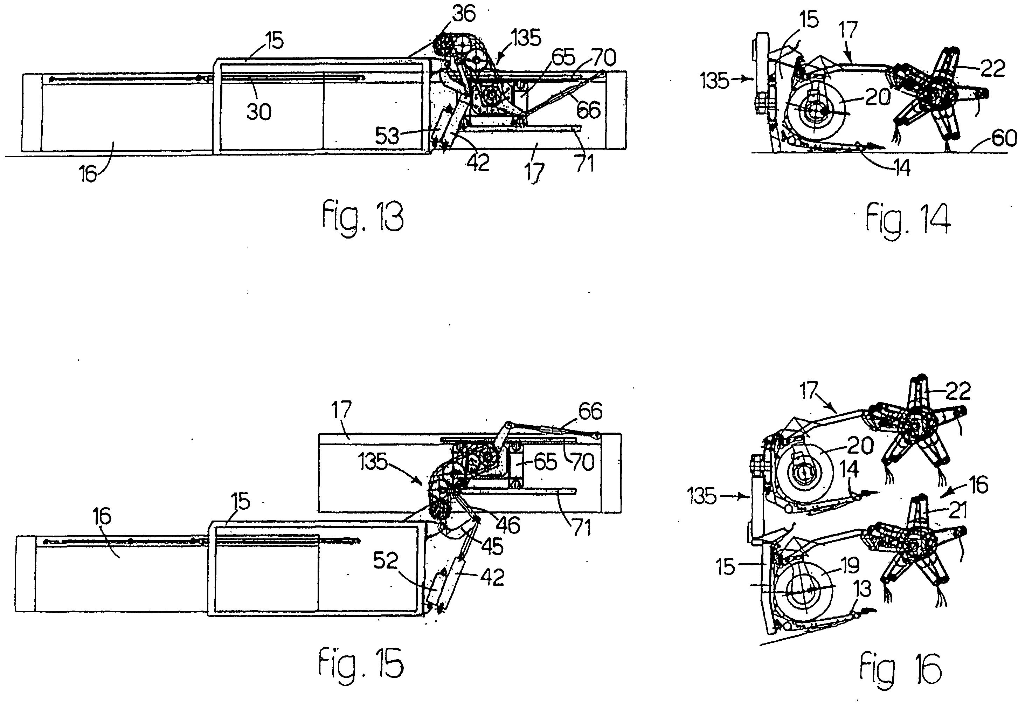

According to a first variant, shown in Figs. 13-22, in the actuation kinematism, shown by the reference number 135, the connection chain 49 between the first and second toothed wheel 36 and 39 is replaced by three other toothed wheels 61, 62, 63, located between the first two and engaged serially with each other. In this case the intermediate toothed wheels 61, 62, 63 are also assembled rotatable on the supporting arm 41. The three toothed wheels 61, 62, 63, being an odd number, perform exactly the same function as the connection chain 49.

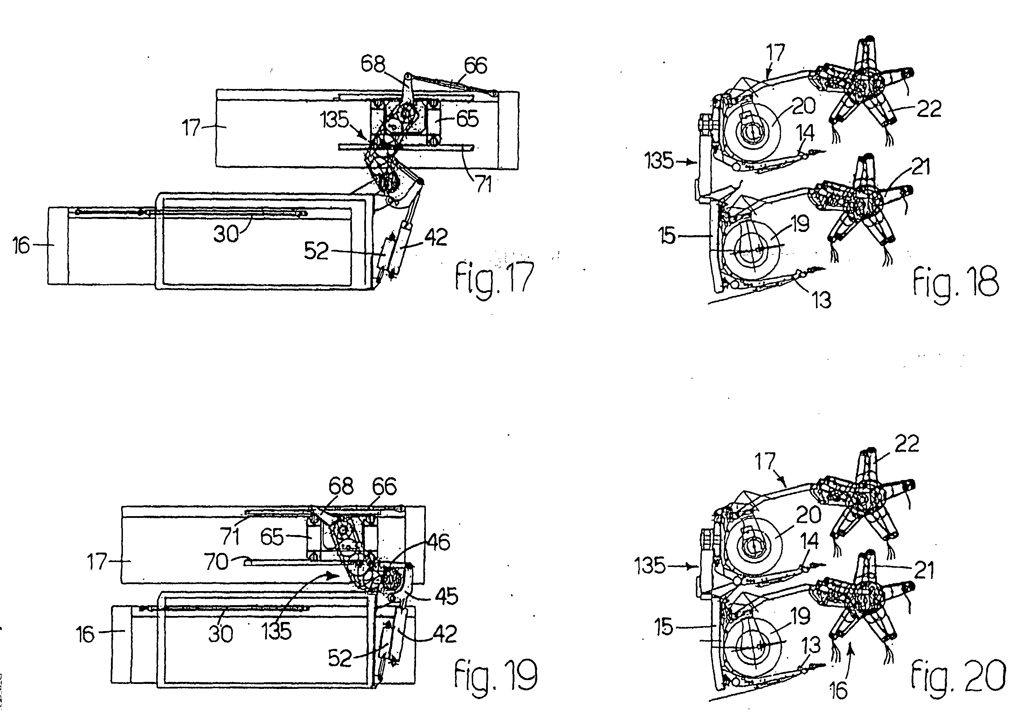

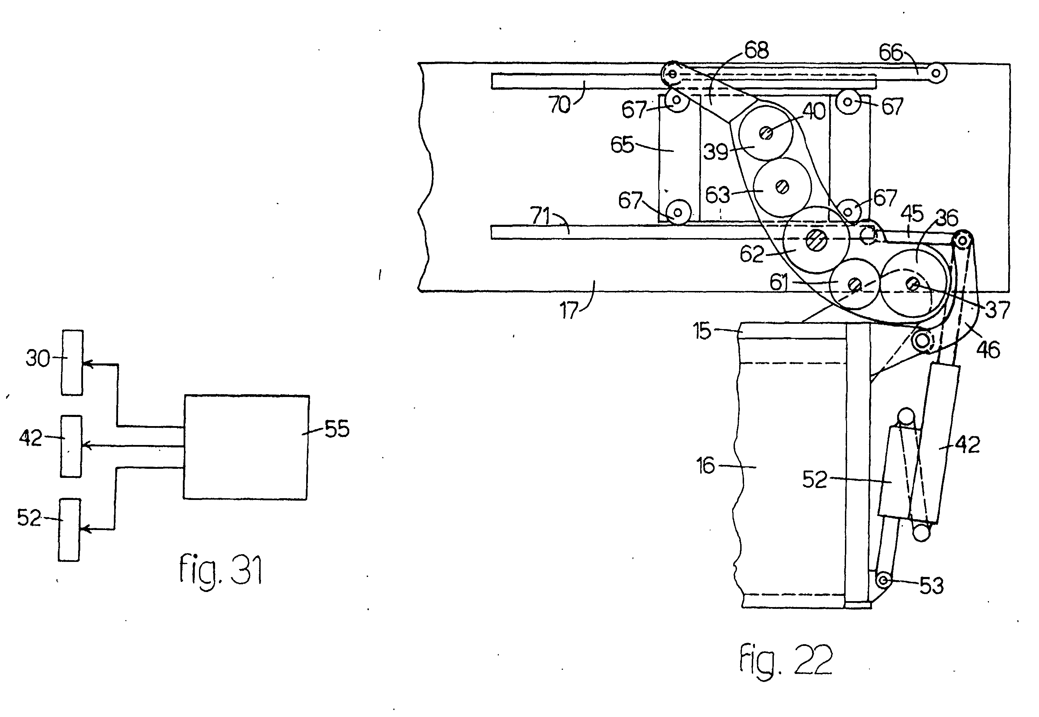

This first variant also provides that the hub 40 of the second toothed wheel 39 is not fixed directly to the second operating part 17, but to a trolley 65 able to slide horizontally with respect to the latter. In this way, by means of a tie-rod 66 connected to an appendix 68 of the supporting arm 41, the second operating part 17 also performs a horizontal displacement with respect to the trolley 65 when the supporting arm 41 makes the terminal part of its rotation, from the intermediate position shown in Fig. 15 to the inactive position shown in Figs. 19 and 22.

The trolley 65 is able to slide, by means of wheels 67, on two horizontal guides 70 and 71.

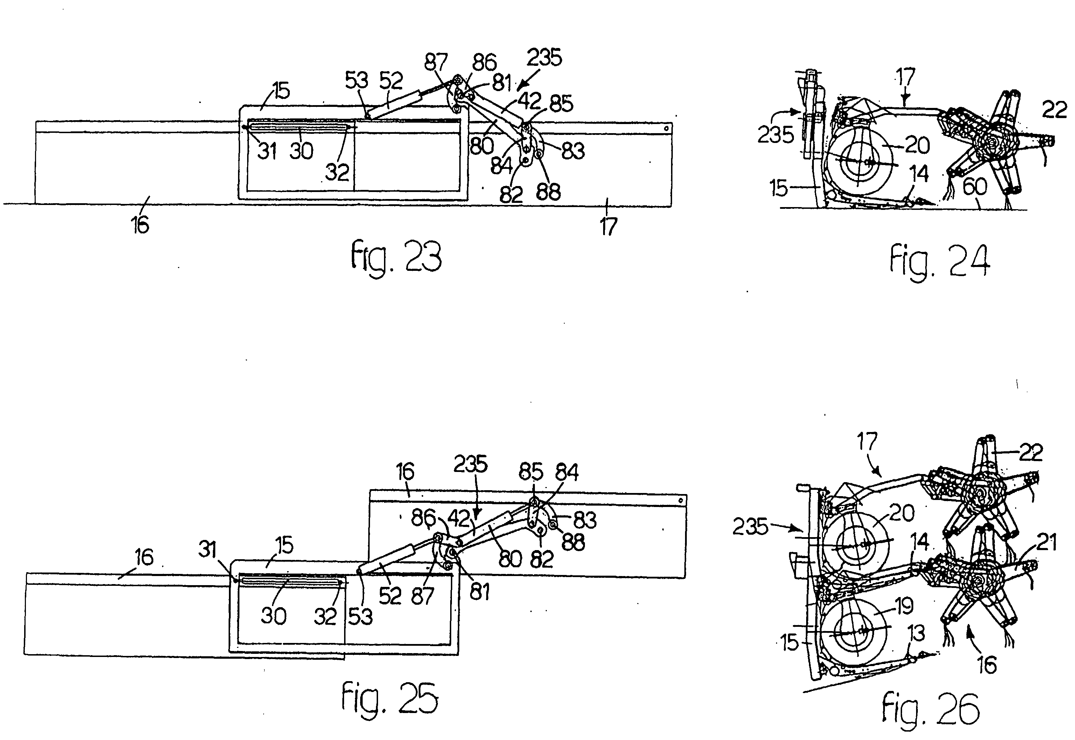

According to another embodiment, shown in Figs. 23-30, the actuation kinematism, indicated by the reference number 235, comprises a first lever 80 pivoting on a horizontal pin 81 of the frame 15 and connected to a pin 82 of the second operating part 17. A second lever 83 has one end 88 attached to the second operating part 17 and is connected to the first lever 80 by means of a third connection lever 84. The articulation pin 85 between the second lever 83 and the third lever 84 is connected to the second actuator 42 which, in this embodiment, is assembled on the first lever 80. The third actuator 52 is connected to the first lever 80 by means of two toggle levers 86 and 87 and is attached, with its end 53, to the upper part of the frame 15.

The third actuator 52 is able to make the first lever 80 selectively rotate around the pin 81, to displace the second operating part 17 from the working position to the inactive position, above the first operating part 16, and vice versa.

The second actuator 42 is able to keep the operating part 17 horizontal during the rotation of the first lever 80.

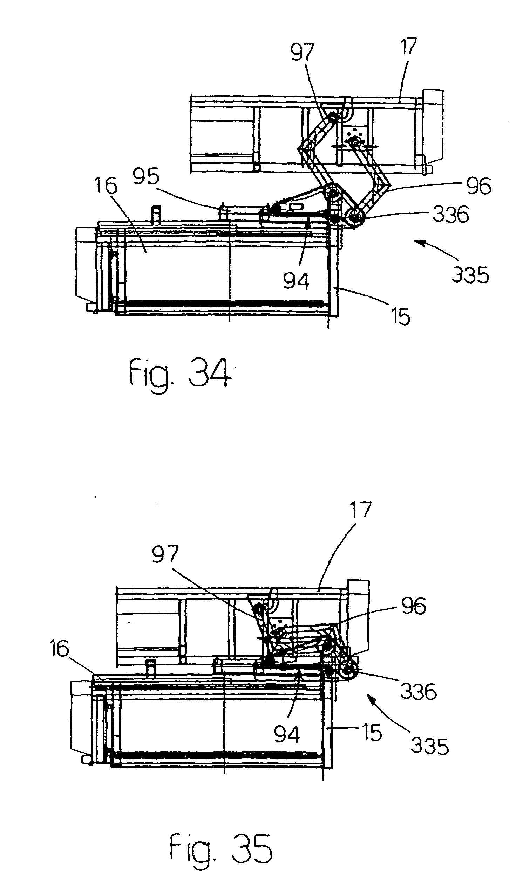

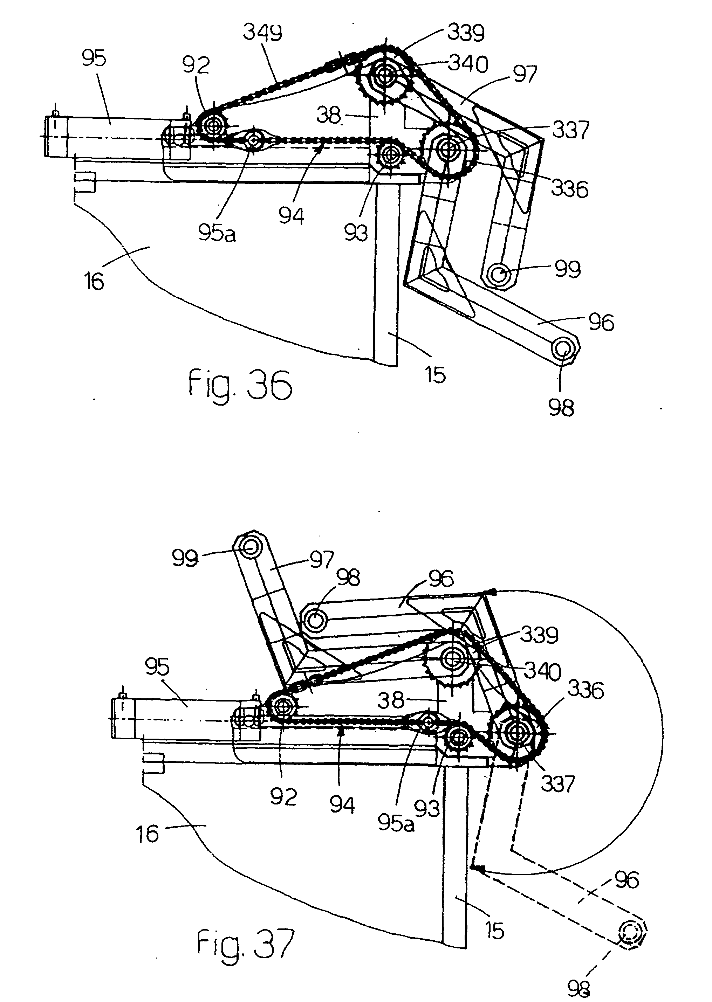

In accordance with a further embodiment, shown in Figs. 32-37, the actuation kinematism, indicated by the reference number 335, comprises two toothed wheels 336 and 339 assembled rotatable around respective pins 337 and 340 both attached to the support 38. The two toothed wheels 336 and 339 are connected by a connection chain 349 arranged so as to make them rotate in the same direction of rotation.

The ends of a first elbow-shaped arm 96 and a second elbow-shaped arm 97, arranged specular to each other, are attached respectively to the two toothed wheels 336 and 339.

Each elbow-shaped arm 96, 97 has its second end connected by means of a pin 98, respectively 99, to the second operating part 17. The distance between the axes of rotation of the two toothed wheels 336 and 339 is equal to the distance between the pin 98 and the pin 99.

In this way a parallelogram is formed which allows the arms 96, 97 to move like a pantograph. This rotation translates the operating part 17 from the working position to the inactive position and vice versa, keeping the operating part 17 substantially horizontal.

A pair of chain-tautening wheels 92, 93 is arranged in such a fashion as to define a substantially rectilinear segment 94 of the connection chain 349, in correspondence with which the latter is connected to the end of the rod 95a of a linear actuator 95 attached to the first operating part 16 in correspondence with the upper surface of the frame 15.

When the linear actuator 95 is actuated, by means of the chain 349 and the toothed wheels 336 and 339, it makes the two elbow-shaped arms 96, 97 rotate.

The kinematism 335 allows to obtain a wide rotation of the arms 96 and 97, an angle α of around 210°, using only the linear actuator 95.

It is obvious that additions or modifications can be made to the apparatus 10 as described heretofore without departing from the spirit and scope of the invention.

For example, instead of the fluid-dynamic actuators 30, 42, 52 and 95, drive means associated with suitable servo mechanisms can equally well be used.

It is also obvious that, although the invention has been described with reference to a specific example, a person of skill in the art shall certainly be able to achieve many other equivalent applications of the apparatus described above, all of which shall come within the field and scope of the invention as defined in the claims.

## Claims

1. Shearing bar apparatus able to be assembled on an agricultural harvesting machine (11), comprising a first and second operating part (16, 17) each provided with a substantially horizontal shearing blade (13, 14), and support means (15) which can be associated with said agricultural machine (11) and able to support said two operating parts (16, 17), said two operating parts (16, 17) being able to assume respective working positions wherein they are adjacent to each other on a horizontal plane and protrude laterally, at least partly, from opposite sides with respect to said agricultural machine (11), the apparatus being **characterized in that** each of said two operating parts (16, 17) is supported in autonomous fashion by said support means (15), that said first operating part (16) is able to slide axially with respect to said support means (15), between said working position and an inactive position, wherein it is centered with respect to said agricultural machine (11), that said second operating part (17) is able to be translated, remaining substantially horizontal, between said working position and an inactive position, wherein it is centered with respect to said agricultural machine (11) and superimposed on top of said first operating part (16), and that at least a kinematism (35, 135, 235, 335) associated with actuation means (30, 42, 52, 95) is provided to perform the translation movement of said second operating part (17).

2. Apparatus as in Claim 1, **characterized in that** said actuation means (30, 42, 52, 95) are able to be actuated in synchronized fashion, to perform the movements of said first and second operating parts (16, 17), so that the baricenter of the combination of said two operating parts (16, 17) remains substantially in a centered position with respect to said agricultural machine (11) also during said movements.

3. Apparatus as in Claim 2, wherein said shearing means comprise at least a shearing blade (13, 14) assembled in a lower zone of the corresponding operating part (16, 17), to be near the ground (60) when each operating part (16, 17) is in the working position, **characterized in that** said actuation means are able to make said second operating part (17) perform purely translatory, not rotational, movements, so that the relative shearing blade (14) is able to remain in its lower position, even when said second operating part (17) is in the inactive position, to allow the driver of said agricultural machine better visibility.

4. Apparatus as in Claim 1, **characterized in that** said kinematism (35) comprises a first toothed wheel (36) assembled fixed on said support means (15), a second toothed wheel (39) attached to said second operating part (17) and a connection chain (49) between said first and second toothed wheels (36, 39).

5. Apparatus as in Claim 4, **characterized in that** said second toothed wheel (39) is assembled, free to rotate, on the end of a supporting arm (41), which is able to rotate around the pin (37) of said first toothed wheel (36), said connection chain (49) between said two toothed wheels (36, 39) causing said second operating part (17) to translate without rotating, and hence remaining constantly horizontal.

6. Apparatus as in Claim 1, **characterized in that** said actuation means comprise at least a first actuator (30) able to horizontally displace said first operating part (16).

7. Apparatus as in Claim 6, **characterized in that** said first fluid-dynamic actuator (30) has one end (31) connected to said supporting structure (15) and one end (32) connected to said first operating part (16).

8. Apparatus as in Claim 1, **characterized in that** said kinematism (135) comprises a first toothed wheel (36) assembled fixed on said support means (15), a second toothed wheel (39) associated with said second operating part (17) and an odd number of toothed wheels (61, 62 and 63) between the first two toothed wheels (36, 39) engaged in series with each other.

9. Apparatus as in Claim 8, **characterized in that** said second toothed wheel (39) is assembled, free to rotate, on the end of a supporting arm (41), which is able to rotate around the pin (37) of said first toothed wheel (36), and that said intermediate toothed wheels (61, 62 and 63) are also assembled rotatable on said supporting arm (41), said intermediate toothed wheels (61, 62 and 63), being odd in number, causing said second operating part (17) to translate without rotating, and hence remaining constantly horizontal.

10. Apparatus as in Claim 9, **characterized in that** the hub (40) of said second toothed wheel (39) is attached to a trolley (65) able to slide horizontally with respect to said second operating part (17).

11. Apparatus as in Claim 10, **characterized in that** a tie-rod (66) is connected to said second operating part (17) and to an appendix (68) of said supporting arm (41), so that said second operating part (17) is also able to perform a horizontal displacement with respect to said trolley (65) when the supporting arm (41) performs the terminal part of its rotation.

12. Apparatus as in Claim 5 or 9, **characterized in that** said actuation means comprise a second actuator (42) able to make said supporting arm (41) rotate and lift said second operating part (17) with respect to said support means (15) and to said first operating part (16).

13. Apparatus as in Claim 12, **characterized in that** said actuation means comprise a third actuator (52), connected to said second actuator (42) and able to be actuated simultaneously with said first actuator (30), so that said third actuator (52) completes the displacement of said second operating part (17) above the first operating part (16), while the first actuator (30) performs the simultaneous horizontal displacement of the first operating part (16) from one to the other of said working and inactive positions.

14. Apparatus as in Claim 13, **characterized in that** said first and third actuators (30, 52) are of the fluid-dynamic type and fluid-dynamically connected with each other.

15. Apparatus as in Claim 1, **characterized in that** said kinematism (235) comprises a first lever (80) pivoting on a horizontal pin (81) of said support means (15) and connected to a pin (82) of said second operating part (17), and a second lever (83) with one end (88) attached to said second operating part (17) and connected to said first lever (80) by means of a third connecting lever (84), the articulation pin (85) between said second lever (83) and said third lever (84) being connected to said actuation means.

16. Apparatus as in Claims 6 and 15, **characterized in that** a second actuator (42) is assembled on said first lever (80) and that a third actuator (52) is connected to said first lever (80) by means of two toggle levers (86, 87) and is attached to said support means (15).

17. Apparatus as in Claim 16, **characterized in that** said third actuator (52) is able to make the first lever (80) selectively rotate around said horizontal pin (81), to displace said second operating part (17) from one to the other of said inactive and working positions, while said second actuator (42) is able to keep said second operating part (17) horizontal during the rotation of said first lever (80).

18. Apparatus as in Claim 1, **characterized in that** said kinematism (335) comprises a first toothed wheel (336) and a second toothed wheel (339) both assembled rotatory on said support means (15), said first toothed wheel (336) being attached to one end of a first arm (96) connected to first pin means (98) of said second operating part (17), said second toothed wheel (339) being attached to one end of a second arm (97) connected to second pin means (99) of said second operating part (17), a connection chain (349) being able to connect said two toothed wheels (336, 339) to each other.

19. Apparatus as in Claim 18, **characterized in that** both of said arms (96 and 97) are substantially elbow-shaped, and are arranged substantially specular to each other, so as to rotate by an angle ("α") greater than 180°.

20. Apparatus as in Claim 18, **characterized in that** the distance between the axes of rotation of said two toothed wheels (336, 339) is substantially equal to the distance between said two pin means (98, 99).

21. Apparatus as in Claim 18, **characterized in that** a pair of chain-tautener elements (92, 93) is arranged so as to define a substantially rectilinear segment (94) of said connection chain (349).

22. Apparatus as in Claim 21, **characterized in that**, in correspondence with said substantially rectilinear segment (94), said connection chain (349) is connected with a fourth actuator (95) assembled on said support means (15).

23. Apparatus as in Claim 13 or 16, **characterized in that** said actuation means comprise computerized control means (55) able to coordinate the actuation of said first, second, third and fourth actuators (30, 42, 52, 95).

24. Apparatus as in Claim 1, **characterized in that** said support means comprise a rear frame (15) able to be assembled on the movable structure (12) of said agricultural machine (11).

25. Apparatus as in Claim 24, **characterized in that** the overall transverse bulk of said rear frame (15) and of said actuation means is less than the length of each of said operating parts (16, 17).

26. Apparatus as in Claim 1, **characterized in that** each of said shearing means (13, 14) is substantially as long as the corresponding operating part (16, 17).

27. Apparatus as in Claim 1, **characterized in that** each operating part (16, 17) comprises a front reel (21, 22).

28. Apparatus as in Claim 1, **characterized in that** each operating part (16, 17) comprises a conveyor roller (19, 20).

## Patentansprüche

1. Mähbalkenvorrichtung, die an einer landwirtschaftlichen Erntemaschine (11) montiert werden kann, umfassend ein erstes und ein zweites Arbeitsteil (16, 17), die jeweils mit einem im Wesentlichen horizontalen Schermesser (13,14) versehen sind, und eine Halterung (15), die mit der landwirtschaftlichen Maschine (11) verbunden werden kann und imstande ist, die zwei Arbeitsteile (16, 17) zu halten, die zwei Arbeitstele (16, 17) entsprechende Arbeitsstellungen einnehmen können, in denen sie sich benachbart zueinander auf einer horizontalen Ebene befinden und seitlich von gegenüber liegenden Seiten relativ zur landwirtschaftlichen Maschine (11) zumindest teilweise hervorstehen, die Vorrichtung **dadurch gekennzeichnet ist, dass** jedes der beiden Arbeitsteile (16, 17) durch die Halterung (15) in unabhängiger Weise gehalten wird, dass sich das erste Arbeitsteil (16) relativ zu der Halterung (15) zwischen der Arbeitsstellung und einer passiven Stellung, in der es relativ zu der landwirtschaftlichen Maschine (11) zentriert wird, axial verschieben kann, dass das zweite Arbeitsteil (17) zwischen der Arbeitsstellung und einer passiven Stellung, in der es relativ zur landwirtschaftlichen Maschine (11) zentriert und auf das erste Arbeitsteil (16) gesetzt wird, im Wesentlichen horizontal bleibend, umgesetzt werden kann, und dass zumindest eine mit Betätigungseinrichtungen (30, 42, 52, 95) verbundene, kinematische Vorrichtung (35, 135, 235. 335) vorgesehen ist, um die Translationsbewegung des zweiten Arbeitsteils (17) auszuführen.

2. Vorrichtung nach Anspruch 1, **dadurch gekennzeichnet, dass** die Betätigungseinrichtungen (30, 42, 52, 95) in synchronisierter Weise betätigt werden können, um die Bewegungen des ersten und des zweiten Arbeitsteils (16, 17) auszuführen, so dass der Schwerpunkt der Kombination der zwei Arbeitsteile (16, 17) auch während der Bewegungen im Wesentlichen in einer relativ zu der landwirtschaftlichen Maschine (11) zentrisch eingestellten Position verbleibt.

3. Vorrichtung nach Anspruch 2, bei der die Schereinrichtungen zumindest ein Schermesser (13, 14) umfässen, das in einem unteren Bereich des entsprechenden Arbeitsteils (16, 17) montiert ist damit es nahe am Boden (60) ist, wenn sich jedes Arbeitsteil (16, 17) in der Arbeitsstellung befindet, **dadurch gekennzeichnet, dass** die Betätigungseinrichtungen imstande sind, das zweite Arbeitsteil (17) rein translatorische, nicht rotierende, Bewegungen ausführen zu lassen, so dass das jeweilige Schermesser (14) in seiner unteren Position bleiben kann, selbst wenn sich das zweite Arbeitsteil (17) in der passiven Stellung befindet, um dem Fahrer der landwirtschaftlichen Maschine (11) eine bessere Sicht zu ermöglichen.

4. Vorrichtung nach Anspruch 1, **dadurch gekennzeichnet, dass** die kinematische Vorrichtung (35) ein erstes Zahnrad (36), das an der Halterung (15) fest montiert ist, ein zweites Zahnrad (39), das an dem zweiten Arbeitsteil (17) befestigt ist, sowie eine Verbindungskette (49) zwischen dem ersten und dem zweiten Zahnrad (36, 39) umfasst.

5. Vorrichtung nach Anspruch 4, **dadurch gekennzeichnet, dass** das zweite Zahnrad (39) an dem Ende eines Haltearms (41), der um den Zapfen (37) des ersten Zahnrades (36) drehen kann, frei drehbar montiert ist, die Verbindungskette (49) zwischen den beiden Zahnrädem (36, 39) bewirkt, dass das zweite Arbeitsteil (17), ohne zu rotieren, sich translatorisch bewegt und damit ständig horizontal bleibt.

6. Vorrichtung nach Anspruch 1, **dadurch gekennzeichnet, dass** die Betätigungseinrichtungen mindestens ein erstes Betätigungselement (30) umfassen, welches das erste Arbeitsteil (16) horizontal verschieben kann.

7. Vorrichtung nach Anspruch 6, **dadurch gekennzeichnet, dass** ein Ende (31) des ersten fluid-dynamischen Betätigungselements (30) mit der Halterung (15) und ein Ende (32) mit dem ersten Arbeitsteil (16) verbunden ist.

8. Vorrichtung nach Anspruch 1, **dadurch gekennzeichnet, dass** die kinematische Vorrichtung (135) ein erstes Zahnrad (36), das an der Halterung (15) fest montiert ist, ein zweites Zahnrad (39), das mit dem zweiten Arbeitsteil (17) verbunden ist, und eine ungerade Anzahl von Zahnrädern (61,62 und 63) umfasst, die zwischen den ersten zwei Zahnrädern (36, 39) in Reihe miteinander in Eingriff gebracht sind.

9. Vorrichtung nach Anspruch 8, **dadurch gekennzeichnet, dass** das zweite Zahnrad (39) an dem Ende eines Haltearms (41), der um den Zapfen (37) des ersten Zahnrades (36) drehen kann, frei drehbar montiert ist, und dass die Zwischenräder (61, 62 und 63) an diesem Haltearm (41) ebenfalls drehbar montiert sind, wobei die Zwischenräder (61, 62 und 63) in ungerader Anzahl sind, was bewirkt, dass das zweite Arbeitsteit (17), ohne zu rotieren, sich translatorisch bewegt und damit ständig horizontal bleibt.

10. Vorrichtung nach Anspruch 9, **dadurch gekennzeichnet, dass** die Nabe (40) des zweiten Zahnrades (39) an einem Wagen (65) befestigt ist, der sich in Bezug auf das zweite Arbeitsteil (17) horizontal verschieben kann.

11. Vorrichtung nach Anspruch 10, **dadurch gekennzeichnet, dass** eine Zugstange (66) mit dem zweiten Arbeitsteil (17) und einem Verlängerungsstück (68) des Haltearms (41) verbunden ist, so dass das zweite Arbeitsteil (17) ebenfalls eine horizontale Verschiebung relativ zu dem Wagen (65) ausführen kann, wenn der Haltearm (41) den letzten Teil seiner Drehung ausführt.

12. Vorrichtung nach Anspruch 5 oder 9, **dadurch gekennzeichnet, dass** die Betätigungseinrichtungen ein zweites Betätigungselement (42) umfassen, das den Haltearm (41) drehen und das zweite Arbeitsteil (17) relativ zu der Halterung (15) und dem ersten Arbeitsteil (16) anheben lässt.

13. Vorrichtung nach Anspruch 12, **dadurch gekennzeichnet, dass** die Betätigungseinrichtungen ein drittes Betätigungselement (52) umfassen, das mit dem zweiten Betätigungselement (42) verbunden ist und gleichzeitig mit dem ersten Betätigungselement (30) betätigt werden kann, so dass das dritte Betätigungselement (52) die Verschiebung des zweiten Arbeitsteils (17) über dem ersten Arbeitsteil (16) beendet, während das erste Betätigungselement (30) die gleichzeitige, horizontale Verschiebung des ersten Arbeitsteils (16) von der einen zu der anderen von Arbeitsstellung und passiver Stellung ausführt.

14. Vorrichtung nach Anspruch 13, **dadurch gekennzeichnet, dass** das erste und das dritte Betätigungselement (30, 52) vom fluid-dynamischen Typ ist und dass sie miteinander fluid-dynamisch verbunden sind.

15. Vorrichtung nach Anspruch 1, **dadurch gekennzeichnet, dass** die kinematische Vorrichtung (235) einen ersten Hebel (80), der um einen horizontalen Zapfen (81) der Halterung (15) drehbar gelagert und mit einem Zapfen (82) des zweiten Arbeitsteils (17) verbunden ist, und einen zweiten Hebel (83) umtasst, dessen eines Ende (88) an dem zweiten Arbeitsteil (17) befestigt und mit dem ersten Hebel (80) mittels eines dritten Verbindungshebels (84) verbunden ist, wobei der Gelenkstift (85) zwischen dem zweiten Hebel (83) und dem dritten Hebel (84) mit der Betätigungseinrichtung verbunden ist.

16. Vorrichtung nach Anspruch 6 und 15, **dadurch gekennzeichnet, dass** ein zweites Betätigungselement (42) an dem ersten Hebel (80) montiert ist, und dass ein drittes Betätigungselement (52) mit dem ersten Hebel (80) mittels zweier Kniehebel (86, 87) verbunden und an der Halterung (15) befestigt ist.

17. Vorrichtung nach Anspruch 16, **dadurch gekennzeichnet, dass** das dritte Betätigungselement (52) den ersten Hebel (80) selektiv um den horizontalen Zapfen (81) drehen lassen kann, um das zweite Arbeitsteil (17) von der einen zu der anderen von passiver Stellung und Arbeitsstellung zu verschieben, während das zweite Betätigungselement (17) imstande ist, das zweite Arbeitsteil (17) bei der Drehung des ersten Hebels (80) horizontal zu halten.

18. Vorrichtung nach Anspruch 1, **dadurch gekennzeichnet, dass** die kinematische Vorrichtung (335) ein erstes Zahnrad (336) und ein zweites Zahnrad (339), die beide drehbar an der Halterung montiert sind, wobei das erste Zahnrad (336) an einem Ende eines ersten Arms (96), der mit dem ersten Zapfen (98) des zweiten Arbeitsteils (17) verbunden ist, befestigt ist, das zweite Zahnrad (339) an einem Ende eines zweiten Arms (97), der mit dem zweiten Zapfen (99) des zweiten Arbeitsteils (17) verbunden ist, befestigt ist, und eine Verbindungskette (349) umfasst, die imstande ist, die beiden Zahnräder (336, 339) miteinander zu verbinden.

19. Vorrichtung nach Anspruch 18, **dadurch gekennzeichnet, dass** beide Arme (96 und 97) im Wesentlichen ellenbogenförmig und im Wesentlichen spiegelbildlich zueinander angeordnet sind, damit sie um einen Winkel ("α") größer als 180° drehen.

20. Vorrichtung nach Anspruch 18, **dadurch gekennzeichnet, dass** der Abstand zwischen den Drehachsen der beiden Zahnräder (336, 339) im Wesentlichen dem Abstand zwischen den zwei Zapfen (98, 99) entspricht.

21. Vorrichtung nach Anspruch 18, **dadurch gekennzeichnet, dass** ein Paar von Kettenspannelementen (92, 93) angeordnet ist, um ein im Wesentlichen geradliniges Segment (94) der Verbindungskette (349) zu bilden.

22. Vorrichtung nach Anspruch 21, **dadurch gekennzeichnet, dass** in Zuordnung mit dem im Wesentlichen geradlinigen Element (94) die Verbindungskette (349) mit einem an der Halterung (15) montierten, vierten Betätigungselement (95) verbunden ist.

23. Vorrichtung nach Anspruch 13 oder 16, **dadurch gekennzeichnet, dass** die Betätigungseinrichtungen computergestützte Steuereinrichtungen (55) umfassen, die imstande sind, die Auslösung des ersten, zweiten, dritten und vierten Betätigungselements (30, 42, 52, 95) zu koordinieren.

24. Vorrichtung nach Anspruch 1, **dadurch gekennzeichnet, dass** die Halterung einen hinteren Rahmen (15) umfasst, der an dem beweglichen Aufbau (12) der landwirtschaftlichen Maschine (11) montiert werden kann.

25. Vorrichtung nach Anspruch 24, **dadurch gekennzeichnet, dass** die gesamte, quer verlaufende Größe des hinteren Rahmens (15) und des Betätigungselements kleiner ist als die Länge von jedem der Arbeitsteile (16, 17).

26. Vorrichtung nach Anspruch 1, **dadurch gekennzeichnet, dass** jede der Schereinrichtungen (13,14) im Wesentlichen so lang ist wie das entsprechende Arbeitsteil (16, 17).

27. Vorrichtung nach Anspruch 1, **dadurch gekennzeichnet, dass** jedes Arbeitsteil (16, 17) eine vordere Haspel (21, 22) umfasst.

28. Vorrichtung nach Anspruch 1, **dadurch gekennzeichnet, dass** jedes Arbeitsteil (16, 17) eine Transportwalze (19,20) umfasst.

## Revendications

1. Tablier de coupe destiné à être monté sur une machine de récolte agricole (11), comprenant un premier et un deuxième organes de fonctionnement (16, 17) qui sont pourvus chacun d'une lame de coupe sensiblement horizontale (13, 14), et de moyens de support (15) qui peuvent être associés à ladite machine agricole (11) et qui sont aptes à supporter lesdits deux organes de fonctionnement (16, 17), lesdits deux organes de fonctionnement (16, 17) étant aptes à assumer des positions de travail respectives, dans lesquelles ils sont adjacents l'un à l'autre sur un plan horizontal et ils font saillie, au moins partiellement, sur des côtés opposés par rapport à ladite machine agricole (11), l'équipement étant **caractérisé en ce que** chacun desdits deux organes de fonctionnement (16, 17) est supporté de façon autonome par lesdits moyens de support (15), que ledit premier organe de fonctionnement (16) est apte à glisser axialement par rapport aux dits moyens de supports (15) entre ladite position de travail et une position inactive dans laquelle il est centré par rapport à ladite machine agricole (11), que ledit deuxième organe de fonctionnement (17) est apte à être translaté, tout en restant sensiblement horizontal, entre ladite position de travail et une position inactive dans laquelle il est centré par rapport à ladite machine agricole (11) et il est superposé en dessus dudit premier organe de fonctiormement (16), et qu'au moins une cinématique (35, 135, 235, 335) associée à des moyens d'actionnement (30, 43, 52, 95) est fournie afin d'exécuter le mouvement de translation dudit second organe de fonctionnement (17).

2. Équipement selon la revendication 1, **caractérisé en ce que** moyens d'actionnement (30, 43, 52, 95) sont fournis pour exécuter, de façon synchronisée, les mouvements desdits premier et deuxième organes de fonctionnement (16, 17), de façon à ce que le baricentre de la combinaison desdits deux organes de fonctionnement (16, 17) reste sensiblement dans une position centrée par rapport à ladite machine agricole (11) également pendant lesdits mouvements.

3. Équipement selon la revendication 2, dans lequel lesdits moyens de coupe comprennent au moins une lame de coupe (13, 14) assemblée dans une zone inférieure de l'organe de fonctionnement (16, 17) correspondant, de façon à se trouer près du sol (60) lorsque chaque organe de fonctionnement (16, 17) se trouve dans la position de travail, **caractérisé en ce que** lesdits moyens d'actionnement sont aptes à amener ledit deuxième organe de fonctionnement (17) à exécuter des mouvements de translation pure, et non de rotation, de façon à ce que la lame de coupe relative (14) puisse demeurer dans sa position abaissée, même lorsque ledit deuxième organe de fonctionnement (17) se trouve dans la position inactive, de façon à permettre à l'opérateur de ladite machine agricole d'avoir une meilleure visibilité.

4. Équipement selon la revendication 1, **caractérisé en ce que** ladite cinématique (35) comprend une première roue dentée (36) assemblée de façon fixe sur lesdits moyens de support (15), et une deuxième roue dentée (39) qui est fixée au dit deuxième organe de fonctionnement (17) et une chaîne de liaison (49) qui est disposée entre lesdites première et deuxième roues dentées (36, 39).

5. Équipement selon la revendication 4, **caractérisé en ce que** ladite deuxième roue dentée (39) est assemblée, et libre de tourner, sur l'extrémité d'un bras de support (41) qui est apte à tourner autour de l'axe (37) de ladite première roue dentée (36), ladite chaîne de liaison (49) entre lesdites première et deuxième roues dentées (36, 39) amenant ledit deuxième organe de fonctionnement (17) à se déplacer sans tourner et à rester par conséquent horizontal.

6. Équipement selon la revendication 1, **caractérisé en ce que** lesdits moyens d'actionnement comprennent au moins un premier actionneur (30) qui est apte à déplacer ledit premier organe de fonctionnement (16) horizontalement.

7. Équipement selon la revendication 6, **caractérisé en ce que** ledit premier actionneur à commande dynamique par fluide (3 0) a une extrémité (31) qui est raccordée à ladite structure de support (15) et une autre extrémité (32) qui est raccordée au dit premier organe de fonctionnement (16).

8. Équipement selon la revendication 1, **caractérisé en ce que** ladite cinématique (135) comprend une première roue dentée (36) assemblée de façon fixe sur lesdits moyens de support (15), et une deuxième roue dentée (39) qui est associée au dit deuxième organe de fonctionnement (17) et un nombre impair de roues dentées (61, 62 et 63) entre lesdites première et deuxième roues dentées (36, 39) qui sont en prise, en série, les unes avec les autres.

9. Équipement selon la revendication 8, **caractérisé en ce que** ladite deuxième roue dentée (39) est assemblée, et libre de tourner, sur l'extrémité d'un bras de support (41) qui est apte à tourner autour de l'axe (37) de ladite première roue dentée (36), et **en ce que** lesdites roues dentées intermédiaires (61, 62 et 63) sont également assemblées de façon à pouvoir tourner sur ledit bras de support (41), lesdites roues dentées intermédiaires (61, 62 et 63) étant d'un nombre impair, et amenant ledit deuxième organe de fonctionnement (17) à se déplacer sans tourner et à rester par conséquent horizontal.

10. Équipement selon la revendication 9, **caractérisé en ce que** le moyeu (40) de ladite deuxième roue dentée (39) est fixé à un chariot (65) qui est apte à glisser horizontalement par rapport au dit deuxième organe de fonctionnement (17).

11. Équipement selon la revendication 10, **caractérisé en ce qu'**une tige de liaison (66) est raccordée au dit deuxième organe de fonctionnement (17) et à une annexe (68) dudit bras de support (41), de façon à ce que ledit deuxième organe de fonctionnement (17) soit également apte à exécuter un mouvement horizontal par rapport au dit chariot (65) lorsque le bras de support (41) exécute la partie finale de sa rotation.

12. Équipement selon la revendication 5 ou 9, **caractérisé en ce que** lesdits moyens d'actionnement comprennent un deuxième actionneur (42) qui est apte à amener ledit bras de support (41) à tourner et à soulever ledit deuxième organe de fonctionnement (17) par rapport aux dits moyens de support (15) et au dit premier organe de fonctionnement (16).

13. Équipement selon la revendication 12, **caractérisé en ce que** lesdits moyens d'actionnement comprennent un troisième actionneur (52) qui est raccordé au dit deuxième actionneur (42) et qui est apte à être actionné en même temps que ledit premier actionneur (30), de telle sorte que ledit troisième actionneur (52) exécute le mouvement dudit deuxième organe de fonctionnement (17) en dessus du premier organe de fonctionnement (16), tandis que le premier actionneur (30) exécute le mouvement horizontal simultané du premier organe de fonctionnement (16) de l'une à l'autre d'entre lesdites position de fonctionnement et position inactive.

14. Équipement selon la revendication 13, **caractérisé en ce que** lesdits premier et troisième actionneurs (30, 52) sont des actionneurs du type à commande dynamique par fluide et se trouvent en connexion dynamique de fluide l'un avec l'autre.

15. Équipement selon la revendication 1, **caractérisé en ce que** ladite cinématique (235) comprend un premier levier (80) qui pivote sur un axe horizontal (81) desdits moyens de support (15) et qui est raccordé à un axe (82) dudit deuxième organe de fonctionnement (17), et un deuxième levier (83) dont une extrémité (88) est raccordée an dit deuxième organe de fonctionnement (17) et raccordée au dit premier levier (80) au moyen d'un troisième levier de raccordement (84), l'axe d'articulation (85) entre ledit seconde levier (83) et ledit troisième levier (84) étant raccordé aux dits moyens d'actionnement.

16. Équipement selon les revendications 6 et 15, **caractérisé en ce qu'**un deuxième actionneur (42) est assemblé sur ledit premier levier (80) et **en ce qu'**un troisième actionneur (52) est raccordé au dit premier levier (80) au moyen de deux leviers à bascule (86, 87) et qu'il est fixé aux dits moyens de support (15).

17. Équipement selon la revendication 16, **caractérisé en ce que** ledit troisième actionneur (52) est apte à amener le premier levier (80) à tourner de façon sélective autour dudit axe horizontal (81), de façon à déplacer ledit deuxième organe de fonctionnement (17) de l'une à l'autre d'entre lesdites position de fonctionnement et position inactive, tandis que ledit deuxième actionneur (42) est apte à maintenir ledit deuxième organe de fonctionnement (17) horizontal pendant la rotation dudit premier levier (80).

18. Équipement selon la revendication 1, **caractérisé en ce que** ladite cinématique (335) comprend une première roue dentée (336) et une deuxième roue dentée (339) qui sont montées toutes les deux de façon à pouvoir tourner sur lesdits moyens de support (15), ladite première roue dentée (336) étant fixée à une extrémité d'un premier bras (96) qui est relié à des premiers moyens formant axe (98) dudit deuxième organe de fonctionnement (17), ladite deuxième roue dentée (339) étant fixée à une extrémité d'un deuxième bras (97) qui est relié à des deuxièmes moyens formant axe (99) dudit deuxième organe de fonctionnement (17), une chaîne de liaison (349) étant apte à raccorder lesdites deux roues dentées (336, 339) l'une à l'autre.

19. Équipement selon la revendication 18, **caractérisé en ce que** les deux desdits bras (96 et 97) ont une forme sensiblement coudée et sont agencés de façon sensiblement spéculaire l'un par rapport à l'autre, de façon à pouvoir tourner sur un angle ("α") de plus de 180°.

20. Équipement selon la revendication 18, **caractérisé en ce que** la distance entre les axes de rotation desdites deux roues dentées (336, 339) est sensiblement égale à la distance entre lesdits deux moyens formant axe (98, 99).

21. Équipement selon la revendication 18, **caractérisé en ce qu'**une paire d'éléments de tension de chaîne (92, 93) est disposée de façon à définir un segment sensiblement rectiligne (94) de ladite chaîne de liaison (349).

22. Équipement selon la revendication 21, **caractérisé en ce que**, en correspondance avec ledit segment sensiblement rectiligne (94), ladite chaîne de liaison (349) est raccordée à un quatrième actionneur (95) monté sur lesdits moyens de support (15).

23. Équipement selon les revendications 13 ou 16, **caractérisé en ce que** lesdits moyens d'actionnement comprennent des moyens de commande par ordinateur (55) qui sont aptes à coordonner l'actionnement desdits premier, deuxième, troisième et quatrième actionneurs (30, 42, 52, 95).

24. Équipement selon la revendication 1, **caractérisé en ce que** lesdits moyens de support comprennent un bâti arrière (15) qui est apte à être monté sur la structure mobile (12) de ladite machine agricole (11).

25. Équipement selon la revendication 24, **caractérisé en ce que** la longueur transversale hors tout dudit bâti arrière (15) et desdits moyens d'actionnement est inférieure à la longueur de chacun desdits organes de fonctionnement (16, 17).

26. Équipement selon la revendication 1, **caractérisé en ce que** chacun desdits moyens de coupe (13, 14) est sensiblement aussi long que l'organe de fonctionnement correspondant (16, 17).

27. Équipement selon la revendication 1, **caractérisé en ce que** chaque organe de fonctionnement (16, 17) est équipé d'un tambour avant (21, 22).

28. Équipement selon la revendication 1, **caractérisé en ce que** chaque organe de fonctionnement (16, 17) est équipé d'un rouleau de convoyeur (19, 20).
